# EUROPEAN PATENT APPLICATION

(11) **EP 4 852 462 A1**
(43) Date of publication of application: **09.12.2026**
(21) Application number: 24921068.3
(22) Date of filing: 04.02.2024
(51) Int. Cl.: H04W 4/021

(54) **METHOD AND APPARATUS FOR TRANSCEIVING INFORMATION**

(71) Applicant: 1FINITY INC., Kawasaki-shi, Kanagawa 211-8588 (JP)
(72) Inventor: HAN, Chao, Beijing 100022 (CN); JIA, Meiyi, Beijing 100022 (CN); GENG, Tingting, Beijing 100022 (CN)
(74) Representative: Haseltine Lake Kempner LLP
(86) International application number: PCT/CN2024/075757
(87) International publication number: WO 2025/161015

(57) **Abstract**

Embodiments of this disclosure provide an information transceiving method and apparatus. The method includes: receiving first information by a terminal equipment from a network device, the first information being at least used to indicate information related to a service area of a service, and being indicated by a SIB associated with the service and/or configuration information related to the service, and the service being a service having a specific service area.

## Description

### Technical Field

This disclosure relates to the field of communication technologies.

### Background

According to the 5G specifications, multicast and broadcast service (MBS) features of a terrestrial network (TN) system may also be used in an NR non-terrestrial network (NTN) system. Compared with the TN system, the NTN system has a larger coverage area, and by utilizing this feature, the MBS features provide important additional values for the NR NTN system.

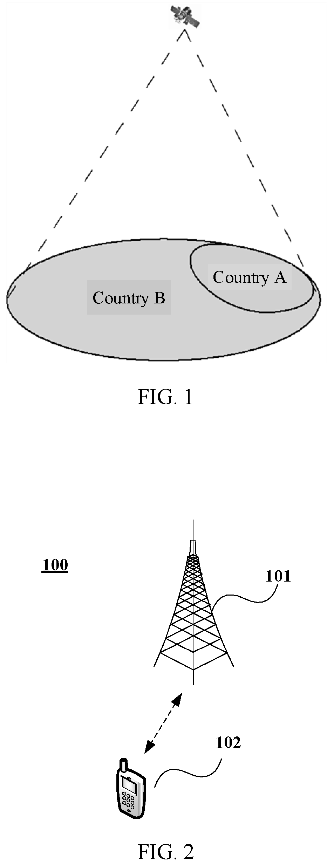

In an NR NTN system, a coverage area of a cell may be large enough to include two or more countries. FIG. 1 is a schematic diagram of a cell coverage area of an NR NTN system. As shown in FIG. 1, a cell of the NR NTN system covers two countries, country A and country B.

Due to laws and regulations, charging, and information content, etc., services of an MBS may be expected to be provided only to one of the two countries, that is, an intended service area of the MBS includes only coverage areas of a part of NTN cells. Therefore, system information needs to be enhanced, so as to notify a service area of a multicast or broadcast service.

It is mentioned in a work item description (WID) of 3GPP Release 19 (R19) that a multicast or broadcast service may not be expected to be provided over the entire coverage area of an NTN cell, and that R19 standardization needs to indicate an intended service area of a service by means of a specified SIB, so as to address a situation of excessive satellite coverage.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

According to the current 3GPP specifications, a terminal equipment obtains MBS broadcast configuration information (MBSBroadcastConfiguration) by receiving an MCCH configuration provided in SIB20, obtains an MTCH configuration from MBSBroadcastConfiguration, obtains G-RNTIs from mbs-SessionInfoList of MBSBroadcastConfiguration, and demodulates MTCH contents carried on a PDSCH according to a G-RNTI. SIB20 is obtained via SI-SchedulingInfo indicated in SIB1.

SI-SchedulingInfo includes systemInformationAreaID, which is used to indicate an identification of an area to which a cell belongs, the identity being unique within a public land mobile network (PLMN) or a standalone non-public network (SNPN). Any SIB configured with areaScope in the system information scheduling information (SI-SchedulingInfo) is deemed as belonging to systemInformationAreaID. If areaScope-r17 is included in SIB-TypeInfo-v1700 related to SIB20, SIB20 is deemed as being applicable to an area specific by systemInformationAreaID. That is, an area attribute to which current system information belongs is unable to be separately configured on a SIB-by-SIB basis, meanwhile, a minimum scope indicated by systemInformationAreaID is at a PLMN or SNPN level, and is unable to indicate a range smaller than the PLMN or SNPN.

Content of SIB20 includes configuration information of an MCCH and common frequency resources for receiving the MCCH and an MTCH, and do not include a restriction on an intended service area. The MBS broadcast configuration information includes an MBS session list, which indicates information MBS-SessionInfo-r17 of each MBS session. The MBS-SessionInfo-r17 includes scheduling information of the MTCH and a corresponding group radio network temporary identifier (G-RNTI), and like the contents of SIB20, does not include a restriction on an intended service area.

It was found by the inventors that for a case where an NTN cell coverage area exceeds an intended service area of a service, according to the current specifications, a network is unable to instruct a terminal equipment be based on the intended service area of a service, or prevent a terminal equipment out of the intended service area from monitoring/detecting/using the service.

In addition, according to requirements of the R19 WID, for a case of large satellite coverage, it is needed to specify a SIB to indicate an intended service area.

Furthermore, in an NTN system, for a broadcast or multicast service with an intended service area different from a cell coverage area, it may possibly not be limited to an MBS service. Therefore, a SIB that needs to be enhanced to indicate the intended service area may possibly not be limited to a SIB associated with the MBS service.

Although a broadcast or multicast service is also applicable to an NR TN cell and an NR NTN cell, a case in which a cell coverage area exceeds an intended service area of the broadcast or multicast service exists more often in an NTN cell. Therefore, an NR TN cell may possibly not be expected to be affected by related improvements; for example, improvements to a SIB for indicating an intended service area of a service should not affect an NR TN cell.

Moreover, the R19 WID on NR NTN does not explicitly indicate a granularity of an intended service area. For a broadcast or multicast service that is not desired to be provided over an entire cell coverage area, a specified service area in which the service is allowed or prohibited may be one or more specific countries, or may be one or more specific planned areas.

In addition to system information, configuration information of a service may also be used to indicate an intended service area of the service. For example, for an MBS service, the intended service area of the MBS may be indicated in MBSBroadcastConfiguration-r17.

In order to solve at least one of the above problems, embodiments of this disclosure provide an information transceiving method and apparatus.

According to a first aspect of the embodiments of this disclosure, there is provided an information transceiving apparatus, provided in a terminal equipment, the apparatus including: a receiving unit configured to receive first information from a network device, the first information being at least used to indicate service area-related information of a service, and being indicated by a SIB associated with the service and/or configuration information related to the service, and the service being a service having a specific service area.

According to a second aspect of the embodiments of this disclosure, there is provided an information transceiving apparatus, provided in a network device, the apparatus including: a transmitting unit configured to transmit first information to a terminal equipment, the first information being at least used to indicate information related to a service area of a service, and being indicated by a SIB associated with the service and/or configuration information related to the service, the service being a service having a specific service area.

According to a third aspect of the embodiments of this disclosure, there is provided a communication system, including a terminal equipment and a network device, the terminal equipment includes the apparatus as described in the embodiment of the first aspect of this disclosure, and the network device includes the apparatus as described in the embodiment of the second aspect of this disclosure.

According to a fourth aspect of the embodiments of this disclosure, there is provided an information transceiving method, the method including: receiving first information by a terminal equipment from a network device, the first information being at least used to indicate service area-related information of a service, and being indicated by a SIB associated with the service and/or configuration information related to the service, and the service being a service having a specific service area.

According to a fifth aspect of the embodiments of this disclosure, there is provided an information transceiving method, the method including: transmitting first information by a network device to a terminal equipment, wherein the first information is at least used to indicate information related to a service area of a service, and is indicated by a SIB associated with the service and/or configuration information related to the service, the service being a service having a specific service area.

According to a sixth aspect of the embodiments of this disclosure, there is provided a computer readable program, which, when executed in an information transceiving apparatus or a terminal equipment, will cause the information transceiving apparatus or the terminal equipment to carry out the information transceiving method as described in the embodiment of the fourth aspect of this disclosure.

According to a seventh aspect of the embodiments of this disclosure, there is provided a computer readable program, which, when executed in an information transceiving apparatus or a network device, will cause the information transceiving apparatus or the network device to carry out the information transceiving method as described in the embodiment of the fifth aspect of this disclosure.

According to an eighth aspect of the embodiments of this disclosure, there is provided a computer readable medium, including a computer readable program, which will cause an information transceiving apparatus or a terminal equipment to carry out the information transceiving method as described in the embodiment of the fourth aspect of this disclosure.

According to a ninth aspect of the embodiments of this disclosure, there is provided a computer readable medium, including a computer readable program, which will cause an information transceiving apparatus or a network device to carry out the information transceiving method as described in the embodiment of the fifth aspect of this disclosure.

An advantage of the embodiments of this disclosure exists in that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a cell coverage range of an NR NTN system;
FIG. 2 is a schematic diagram of a communication system of an embodiment of this disclosure;
FIG. 3 is a schematic diagram of an information transceiving method of an embodiment of this disclosure;
FIG. 4 is another schematic diagram of the information transceiving method of the embodiment of this disclosure;
FIG. 5 is an interaction graph of the information transceiving method of the embodiment of this disclosure;
FIG. 6 is a schematic diagram of an information transceiving apparatus of an embodiment of this disclosure;
FIG. 7 is a schematic diagram of an information transceiving apparatus of an embodiment of this disclosure;
FIG. 8 is a block diagram of a systematic structure of a terminal equipment of an embodiment of this disclosure; and
FIG. 9 is a block diagram of a systematic structure of a network device of an embodiment of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and NEW Radio (NR) in the future, etc., and/or other communication protocols that are currently known or will be developed in the future.

In the embodiments of this disclosure, the term "network device" or "network node", for example, refers to a device in a communication system that accesses a user equipment to the communication network and provides services for the user equipment. The network device or network node may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the gNB DU is a logical node of the gNB having a part of functions of the gNB. And a term "cell" may refer to a base station and/or its coverage area, depending on a context of the term. One gNB-DU supports one or more cells, and one cell is supported by one gNB-DU only.

In the embodiments of this disclosure, the term "user equipment (UE)" refers to, for example, an equipment accessing to a communication network and receiving network services via a network device, may also be referred to as "terminal equipment (TE)". The terminal equipment may be fixed or mobile, and may also be referred to as a mobile station (MS), a terminal, a subscriber station (SS), an access terminal (AT), such as a terminal equipment supported by an IAB-node or IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "when...", "in a case of...", "for a case where..." and "if" all indicate being based on one or more conditions or states, and in addition, these expressions are interchangeable.

Scenarios of the embodiments of this disclosure shall be described below by way of examples; however, this disclosure is not limited thereto.

FIG. 2 is a schematic diagram of a communication system of an embodiment of this disclosure, in which a case where a terminal equipment and a network device are taken as examples is schematically shown. As shown in FIG. 2, a communication system 100 may include a network device 101 and a terminal equipment 102. For the sake of simplicity, an example having only one terminal equipment and one network device is schematically given in FIG. 2; however, the embodiment of this disclosure is not limited thereto.

In the embodiment of this disclosure, existing services or services that may be implemented in the future may be performed between the network device 101 and the terminal equipment 102. For example, such services may include but not limited to an enhanced mobile broadband (eMBB), massive machine type communication (mMTC), and ultra-reliable and low-latency communication (URLLC), etc.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). high layer signaling may also be, for example, medium access control (MAC) signaling, or an MAC control element (MAC CE); however, this disclosure is not limited thereto.

Implementations of the embodiments of this disclosure shall be described below with reference to the accompanying drawings; however, these implementations are illustrative only, and are not intended to limit this disclosure.

### Embodiment of a first aspect

The embodiment of this disclosure provides an information transceiving method, applicable to a terminal equipment, such as the terminal equipment 102 in FIG. 2.

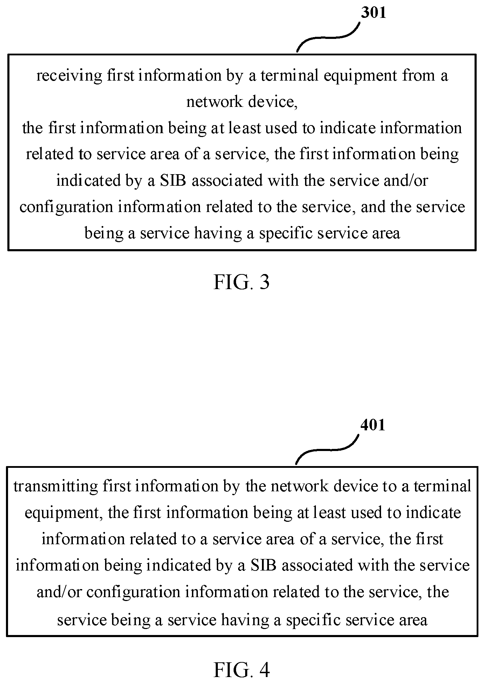

FIG. 3 is a schematic diagram of the information transceiving method of the embodiment of this disclosure. As shown in FIG. 3, the method includes:
301: receiving first information by a terminal equipment from a network device,
the first information being at least used to indicate information related to service area of a service, the first information being indicated by a SIB associated with the service and/or configuration information related to the service, and the service being a service having a specific service area.

In operation 301, the terminal equipment receives the first information from the network device, the first information being at least used to indicate information related to service area of a service, the first information being indicated by a SIB associated with the service and/or configuration information related to the service, and the service being a service having a specific service area.

Or, operation 301 may also be described as follows: receiving information related to a service area of a service by the terminal equipment from the network device, the information related to the service area of the service being indicated by a SIB associated with the service and/or configuration information related to the service, and the service being a service having a specific service area.

In some embodiments, the service is a broadcast or multicast service.

In some embodiments, that the service is a service having a specific service area refers to that a broadcast or multicast service may be a service customized for a specific range (service area) and is allowed or valid only within the specific range. When a cell has an excessively large coverage area, it is possible that only a part of the area of the cell is applicable to the service, rather than the entire coverage area of the cell. Therefore, the network needs to notify the terminal equipment of information related to the service area of the service.

In some embodiments, the service area of the service represents a specific service area of the service, and may also be referred to as an expected service area or a predefined service area or an intended service area of the service.

In some embodiments, an area not served by the service represents an area out of the specific service area of the service, and may also be referred to as a non-service area or a non-expected service area or a non-predefined service area or a non-intended area of the service.

In some embodiments, the broadcast or multicast service is not limited to multicast and broadcast services (MBS service) with an intended service area not including entire cell coverage area, but it may also be another broadcast service or multicast service that the network expects to provide to terminal equipment in a predefined area.

In some embodiments, the information related to service area may include an intended service area of the service, i.e., information of a specific service area in which the network allows or expects the terminal equipment to use the service. Alternatively, the information related to service area may comprise information indicating a non-intended service area of the service, i.e., information of an area in which the network prohibits or does not expect the terminal equipment to use the service.

In some other embodiments, the information related to service area may possibly include only indication information used to indicate that the service is applicable to a specific area rather than to the entire cell as a service scope.

In some embodiments, the information related to the service area of the service may be indicated by a system information block (SIB) related to the service, and/or may be indicated by a configuration message related to the service.

In some embodiments, the service is not limited to an MBS service. Hence, the SIB associated with the service may include not only SIB1 and SIB20 related to the MBS service but also a SIB associated with another service, and the configuration related to the service may include not only an MBS-related configuration but also a configuration related to another service.

A method for indicating the information related to a service area of a service shall be described below in detail.

In some embodiments, the information related to the service area of the service is indicated in a SIB associated with the service, the SIB associated with the service including scheduling information of the SIB associated with the service and/or a SIB information element (IE) associated with the service.

In some embodiments, the information related to the service area of the service is indicated in scheduling information of the SIB associated with the service, for example, the information related to the service area of the service is indicated in scheduling information of the SIB of the service (referred to as "method 1" for ease of description). Method 1 shall be described below in detail.

In some embodiments, the scheduling information of the SIB of the service is included in system information scheduling information related to the SIB in a SIB1 message,
for example, in SI-SchedulingInfo or SI-SchedulingInfo-v1700;
for another example, in SchedulingInfo in schedulingInfoList of SI-SchedulingInfo;
for a further example, in SchedulingInfo2-r17 in schedulingInfoList2-r17 of SI-SchedulingInfo-v1700.

Hence, the information related to the service area of the service is indicated in the scheduling information of the system information, thereby indicating service areas of services related to all system information scheduled in the system scheduling information, avoiding repeated indication of services with identical service area attributes, and saving signaling payload overhead.

In some embodiments, the information related to the service area of the service is indicated in system information block (SIB) type information of the SIB associated with the service, the system information block type information being included under a SIB mapping information structure of system information (SI) scheduling information of the SIB of a SIB1.

For example, the information related to the service area of the service is indicated in the SIB type information of the SIB of the service, the SIB type information being included under the SIB mapping information structure in the scheduling information under the system information (SI) scheduling information of the SIB in SIB1,
such as SIB-TypeInfo under sib-MappingInfo of SchedulingInfo, and
SIB-TypeInfo-v1700 under sib-MappingInfo-r17 of SchedulingInfo2-r17.

Hence, the information related to the service area of the service is indicated in a configuration of the system information block type, and service areas may be indicated separately for services related to different SIBs. For different SIBs in the same system information scheduling configuration, the related services may be applicable to the entire cell, or may have different service areas, thereby increasing flexibility.

The method of indicating the information related to the service area of the service in the scheduling information of the SIB of the service, i.e. method 1, is described above. As the information related to the service area of the service is included in a configuration scheduled by the system information, the terminal equipment, according to the configuration, may determine whether to further detect corresponding SIB contents, thereby avoiding unnecessary detection and decoding, and saving power consumption of the terminal equipment.

In some embodiments, the information related to the service area of the service is indicated in a SIB information element related to the service (referred to as "method 2" for ease of description).

For example, for an MBS service, the information related to a service area of the MBS service is indicated in SIB20-r17.

Hence, the information related to the service area of the service is indicated in a SIB associated with a specific service, so as to avoid affecting other services applicable to the entire cell. Only when the service may be partially applicable to the coverage area of the cell may it be needed to indicate the service area of the service. By applying method 2, the terminal equipment determines, according to the information related to the service area of the service indicated in the SIB, whether to further read or detect information of the service related to the SIB.

In some embodiments, in an NTN cell, for a service having a specific service area, i.e. a service predefined to be provided only to a terminal equipment in a part of a cell coverage area, or a service available or valid only in a part of the cell coverage area, the information related to the service area of the service may be indicated via NTN-related signaling, and a TN cell is not affected by improvement to the NTN-related signaling (referred to as "method 3" for ease of description). Method 3 shall be described below in detail.

In some embodiments, in an NTN cell, the information related to the service area of the service is indicated in scheduling information of SIB19.

For example, an indicated position includes at least one of the following:
SchedulingInfo2-r17 for SIB19; and
SIB-TypeInfo-v1700 for SIB19.

In some embodiments, in an NTN cell, the information related to a service area of the service or a list of information related to a service area is indicated in an information element of SIB19.

For example, an indicated position includes at least one of the following:
SIB19-r17; and
ntn-Config-r17 of SIB19-r17.

In some embodiments, in an NTN cell, the indicated information related to the service area of the service includes at least one of the following:
the information related to a service area of the service or the list of information related to a service area of the service;
information of a service having a specific service area or a list of information of a service having a specific service area, for example, the information of the service may be a service ID, or a service name, or a SIB related to the service, etc.; and
a mapping relationship between the information related to a service area of the service and the information of a service having the specific service area.

In some embodiments, the mapping relationship between the information related to a service area of the service and the information of the service having a specific service area includes at least one of the following:
a mapping between the information related to a service area and a service or information of the service or a list of information of the service having the service area; for example, for a configuration of a specific service area (such as ntn-areaScope) in an NTN cell, in addition to a service area, a service (list) having the service area is further included; and
a mapping between the information of the service and the information related to a service area of the service or the list of information related to a service area of the service; for example, for a configuration of a service having a specific service area (such as ntn-areaService) in an NTN cell, in addition to a service ID, information or information list related to a service area of the service is further included.

Hence, by indicating the information related to the service area of the service by the NTN-related signaling, an impact on the TN system may be avoided, no new signaling content or message content will be added into the TN system, and terminal equipment in the TN system do not need to support or determine related features.

In some embodiments, the information related to the service area of the service is indicated in the configuration information related to the service (referred to as "method 4" for ease of description). Method 4 shall be described below in detail.

In some embodiments, the service is an MBS service, and the related configuration information is an MBS broadcast configuration.

For example, as option 1, information related to service areas of all sessions of the MBS service is indicated in the MBS broadcast configuration, such as including the information related to service areas in at least one of the following:
MBSBroadcastConfiguration-r17;
criticalExtensions under MBSBroadcastConfiguration-r17; and
MBSBroadcastConfiguration-r17-Ies in criticalExtensions under MBSBroadcastConfiguration-r17.

For another example, as option 2, information related to service areas is indicated separately for different sessions of the MBS service in the MBS broadcast configuration. Hence, different MBS sessions may configure different information related to service areas. For example, the information related to service areas is included in each MBS-SessionInfo-r17 of MBS-SessionInfoList-r17 under MBSBroadcastConfiguration-r17-IEs.

In some embodiments, the SIB associated with the service indicates that the service is a service having a specific service area, and the configuration information related to the service indicates an (non-)intended service area of the service. i.e. a non-intended service area and/or an intended service area.

That is, method 4 may be combined with method 1, method 2 and method 3, i.e. in the SIB, only whether the service serves a specific area rather than the entire cell coverage range is indicated, and in the configuration related to the service, a specific non-intended service area and/or intended service area of the service is/are indicated.

Hence, the information related to the service area of the service is indicated in the configuration information related to the service. For all sub-services or service sessions included in the service, a common service area may be configured, or different service areas may be configured for different sub-services or sessions of the service. For example, for an MBS service, intended service areas of different sessions may be different. In option 2 of method 4, different service areas may be configured for different MBS sessions, thereby increasing flexibility.

In some embodiments, for a service with a service area that is not the entire cell, the network indicates information related to the service area of the service to the terminal equipment, so as to prevent the terminal equipment from attempting to parse or use the service in an unnecessary area or a prohibited area. The information related to the service area of the service may be an intended service area of the service, such as an area expected by the service to serve or an area in which the service is allowed to serve, or may be a non-intended service area of the service, such as an area not expected by the service to serve or an area in which the service is prohibited.

For the non-intended service area and/or the intended service area of the service, according to different requirements, there may be multiple possible division manners. For example, an existing area definition, such as a country code, or a tracking area indication, etc., may be used to divide the service area, or new area identifications may be defined or assigned for division.

In some embodiments, the information related to the service area of the service includes at least one of the following:
an indication that the service is a service having a specific service area;
a service area of the service (intended service area); and
a non-service area of the service (non-intended service area).

In some embodiments, the service area (intended service area) of the service and/or the non-service area (non-intended service area) of the service is/are indicated in at least one of the following manners:
an area covered by a specific beam or beam list;
an area identified by a specific PLMN or PLMN list;
an area identified by a specific TAI or TAI list;
an area identified by a specific area identification or area identification list, wherein the specific area identification is an identification assigned by a network for a planned geographical area; and
enhancing a definition of existing system information.

In some embodiments, for the manner for indicating an area covered by a specific beam or beam list,
for example, according to the non-intended service area and/or intended service area of the service, the network indicates a beam or beam list covering the non-intended service area and/or the intended service area of the service to the terminal equipment.

For example, the terminal equipment obtains a beam to which it belongs according to a physical position of itself or beam measurement. When the beam to which the terminal equipment belongs matches a beam or beam list of the intended service area of the service indicated by the network, the terminal equipment attempts to parse the information related to the service and use the service; otherwise, the terminal equipment does not decode or detect any information of the service. When the beam to which the terminal equipment belongs matches a beam or beam list of the non-intended service area of the service indicated by the network, the terminal equipment does not decode or detect any information of the service; otherwise, the terminal equipment attempts to parse information related to the service and use the service.

For example, the network may further adjust coverage of a beam or beam list by dynamically adjusting a beam pattern, and use a beam or beam list that covers only the service area of the service for transmission related to the service, while avoiding use of a beam or beam list with coverage including a non-service area.

In some embodiments, for the manner for indicating an area identified by a specific PLMN or PLMN list,
for example, when the non-intended service area and/or intended service area of the service is divided or restricted per country, the network may indicate the non-intended service area and/or intended service area of the service by indicating a PLMN or PLMN list of the non-intended service area and/or intended service area of the service to the terminal equipment.

For example, when a PLMN to which a current position of the terminal equipment belongs matches a PLMN or PLMN list of the intended service area of the service indicated by the network, the terminal equipment attempts to parse the information related to the service and use the service; otherwise, the terminal equipment does not decode or detect any information of the service. When the PLMN to which the current position of the terminal equipment belongs matches a PLMN or PLMN list of the non-intended service area of the service indicated by the network, the terminal equipment does not decode or detect any information of the service; otherwise, the terminal equipment attempts to parse the information related to the service and use the service.

In some embodiments, for the manner for indicating an area identified by a specific TAI or TAI list,
for example, a TAI is composed of a PLMN ID and a TAC. When the non-intended service area and/or intended service area of the service may be distinguished by the TAI, the network may indicate the non-intended service area and/or intended service area of the service by indicating a TAI or TAI list of the non-intended service area and/or intended service area of the service to the terminal equipment;
for example, the NTN network may determine an association between a TAI and the non-intended service area and/or intended service area of the service according to an existing division of TAIs by a TN network, or according to a mapping between a TAI under the NTN network and a geographical position, and then determine the TAI or TAI list of the non-intended service area and/or intended service area of the service;
for example, when a TAI of the current position of the terminal equipment matches a TAI or TAI list of the intended service area of the service indicated by the network, the terminal equipment attempts to parse the information related to the service and use the service; otherwise, the terminal equipment does not decode or detect any information of the service. When the TAI of the current position of the terminal equipment matches a TAI or TAI list of the non-intended service area of the service indicated by the network, the terminal equipment does not decode or detect any information of the service; otherwise, the terminal equipment attempts to parse the information related to the service and use the service.

In some embodiments, for the manner for indicating an area identified by a specific area identification or area identification list,
for example, the service area of the service may not be divided by an existing area-related identification. According to different service requirements, the non-intended service area and/or intended service area of the service may be a specific area or specific areas, and the network introduces a new area identification for the specific area;
for example, the network may indicate a mapping relationship between an area identification and a specific area to the terminal equipment within a coverage area, or allocate an area identification to a terminal equipment according to the position of the terminal equipment. For a user not in the specific area, the network may not configure an area identification for the user;
for example, the terminal equipment determines an area identification of the current position according to the current position or a manner indicated by the network, etc. If the position of the terminal equipment does not belong to some specific areas, the terminal equipment may have no configuration of a specific area identification.

For example, the network indicates an area identification or area identification list of the non-intended service area and/or intended service area of the service to the terminal equipment, so as to indicate the non-intended service area and/or intended service area of the service.

For example, when the terminal equipment has an area identification and the identification matches an identification or identification list of the intended service area of the service indicated by the network, the terminal equipment attempts to parse the information related to the service and use the service; otherwise, the terminal equipment does not decode or detect any information of the service. When the terminal equipment does not have an area identification or the identification matches an identification or identification list of the non-intended service area of the service indicated by the network, the terminal equipment does not decode or detect any information of the service; otherwise, the terminal equipment attempts to parse the information related to the service and use the service.

In some embodiments, for the manner of indicating enhancing a definition of existing system information,
for example, the enhancing a definition of existing system information includes at least one of the following:
indicating area identifications to which the system information and a service related to the system information are applicable via a system information area identification in existing system information scheduling information; for example, SI-SchedulingInfo includes systemInformationAreaID for indicating the area identification to which the system information is applicable, and the area may include the entire coverage area of the cell, or may include only a coverage scope of the cell;
indicating that the SIB and a service related to the SIB are services having specific service areas via type information of SIBs in the existing system information scheduling information; for example, areaScope in SIB-TypeInfo is used to indicate that the SIB and the service related to the SIB are services having specific service areas; and
adding a sub-area identification of the system information area identification to type information of the SIBs in the existing system information scheduling information, wherein the sub-area identification is used to indicate the SIB and the service area of the service related to the SIB, such as SIB-TypeInfo, and adding a sub-area identification of the system information area identification of the SIB, such as systemInformationSubAreaID or SIBAreaID, which is used to indicate the SIB and the service area of the service related to the SIB.

In the embodiment of this disclosure, which manner is used to indicate the non-intended service area and/or intended service area of the service may be flexibly determined based on requirements of a current service. Therefore, unnecessary signaling interaction may be avoided, and signaling payload overhead caused by unnecessary area refinement may also be avoided.

Hence, with the above indication manners, the manner where the network indicates the service area of the service to the terminal equipment in the case where the intended service area of the service is different from the entire cell coverage area is specified. When an identification that may represent an area and is defined in an existing network is unable to meet requirements of the service having a specific service area, a new area identification may be introduced to indicate the non-intended service area and/or the intended service area of the service. The network may further dynamically adjust a beam pattern to avoid transmitting information related to the service out of the intended service area of the service.

It can be seen from the above embodiment that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

### Embodiment of a second aspect

The embodiment of this disclosure provides an information transceiving method. This method is applicable to a network device side, and corresponding to the information transceiving method applicable to the terminal equipment described in the embodiment of the first aspect, and reference may be made to the embodiment of the first aspect for identical or corresponding contents.

This method is applicable to a network device, such as the network device 101 in FIG. 2.

FIG. 4 is a schematic diagram of the information transceiving method of the embodiment of this disclosure. As shown in FIG. 4, the method includes:
401: transmitting first information by the network device to a terminal equipment, the first information being at least used to indicate information related to a service area of a service, the first information being indicated by a SIB associated with the service and/or configuration information related to the service, the service being a service having a specific service area.

In some embodiments, the information related to the service area of the service is indicated in the SIB associated with the service, and the SIB associated with the service includes scheduling information of the SIB associated with the service and/or a SIB information element (IE) associated with the service.

In some embodiments, the information related to the service area of the service is indicated in the scheduling information of the SIB associated with the service, such as indicating the information related to the service area of the service in system information block (SIB) type information of the SIB associated with the service, the system information block type information being included under a SIB mapping information structure of the scheduling information of the SIB associated with the service;
and/or,
the information related to the service area of the service is indicated in the SIB information element related to the service.

In some embodiments, the information related to the service area of the service is indicated in the configuration information related to the service; or
that the service is a service having a specific service area is indicated in the SIB associated with the service, and contents of the service area of the service are indicated in the configuration information related to the service.

In some embodiments, the information related to the service area of the service includes at least one of the following:
an indication that the service is a service having a specific service area;
a service area of the service (an intended service area); and
a non-service area of the service (a non-intended service area).

In some embodiments, the service area (an intended service area) of the service and/or the non-service area (a non-intended service area) of the service is/are indicated in at least one of the following manners:
an area covered by a specific beam or beam list;
an area identified by a specific PLMN or PLMN list;
an area identified by a specific TAI or TAI list;
an area identified by a specific area identification or area identification list, wherein the specific area identification is an identification assigned by a network for a planned geographical area; and
enhancing a definition of existing system information.

In the embodiments of this disclosure, reference may be made to related description in the embodiment of the first aspect for specific implementations of the above operations, which shall not be repeated herein any further.

It can be seen from the above embodiment that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

### Embodiment of a third aspect

The embodiment of this disclosure provides an information transceiving method. This method is applicable to a terminal equipment and a network device, such as the terminal equipment 102 and the network device 101 in FIG. 2. This method corresponds to the information transceiving method applicable to the terminal equipment described in the embodiment of the first aspect and the information transceiving method applicable to the network device described in the embodiment of the second aspect, with identical contents being not going to be described herein any further.

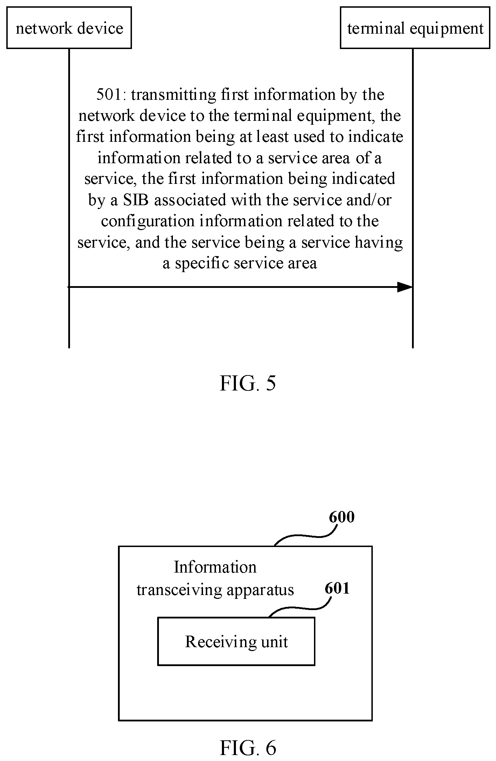

FIG. 5 is an interaction graph of the information transceiving method of the embodiment of this disclosure, and method is applicable to a terminal equipment and a network device. As shown in FIG. 5, the method includes:
501: transmitting first information by the network device to the terminal equipment, the first information being at least used to indicate information related to a service area of a service, the first information being indicated by a SIB associated with the service and/or configuration information related to the service, and the service being a service having a specific service area.

In the embodiment of this disclosure, reference may be made to the embodiment of the first aspect for specific implementation of the above operation, which shall not be repeated herein any further.

It can be seen from the above embodiment that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

### Embodiment of a fourth aspect

The embodiment of this disclosure provides an information transceiving apparatus, provided in a terminal equipment. As a principle of the apparatus is identical to that of the method in the embodiment of the first aspect, reference may be made to the embodiment of the first aspect for implementation of the apparatus, with identical or related parts being not going to be described herein any further.

FIG. 6 is a schematic diagram of the information transceiving apparatus of the embodiment of this disclosure. As shown in FIG. 6, an information transceiving apparatus 600 includes:
a receiving unit 601 configured to receive first information from a network device,
the first information being at least used to indicate information related to a service area of a service, the first information being indicated by a SIB associated with the service and/or configuration information related to the service, and the service being a service having a specific service area.

In some embodiments, the information related to the service area of the service is indicated in the SIB associated with the service,
and the SIB associated with the service comprises scheduling information of the SIB associated with the service and/or a SIB information element (IE) associated with the service.

In some embodiments, the information related to the service area of the service is indicated in the scheduling information of the SIB associated with the service,
for example, the information related to the service area of the service is indicated in system information block type information of the SIB associated with the service, the system information block type information being included under a SIB mapping information structure of the scheduling information of the SIB associated with the service.

In some embodiments, the scheduling information of the SIB associated with the service is included in system information scheduling information related to the SIB of a SIB message.

In some embodiments, under an NTN cell, the information related to the service area of the service is indicated in scheduling information of SIB19, and/or the information related to a service area of the service or a list of information related to a service area is indicated in an information element of SIB19.

In some embodiments, under the NTN cell, the indicated information related to the service area of the service includes at least one of the following:
information of a service having a specific service area or a list of information of a service having a specific service area; and
a mapping relationship between the information related to a service area of the service and the information of a service having the specific service area.

In some embodiments, the mapping relationship between the information related to a service area of the service and the information of the service having a specific service area includes at least one of the following:
a mapping between the information related to a service area and a service or information of the service or a list of information of the service having the service area; and
a mapping between the information of the service and the information related to a service area of the service or the list of information related to a service area of the service.

In some embodiments, the information related to the service area of the service is indicated in a SIB information element related to the service.

In some embodiments, the information related to the service area of the service is indicated in configuration information related to the service.

In some embodiments, the service is an MBS service, and the related configuration information is an MBS broadcast configuration,
wherein information related to service area of all sessions of the MBS service is indicated in the MBS broadcast configuration, or information related to service area is indicated respectively for different sessions of the MBS service in the MBS broadcast configuration.

In some embodiments, that the service is a service having a specific service area is indicated in the SIB associated with the service, and content of the service area of the service is indicated in the configuration information related to the service.

In some embodiments, the information related to the service area of the service includes at least one of the following:
an indication that the service is a service having a specific service area;
a service area of the service (an intended service area); and
a non-service area of the service (a non-intended service area).

In some embodiments, the service area (an intended service area) of the service and/or the non-service area (a non-intended service area) of the service is/are indicated in at least one of the following manners:
an area covered by a specific beam or beam list;
an area identified by a specific PLMN or PLMN list;
an area identified by a specific TAI or TAI list;
an area identified by a specific area identification or area identification list, wherein the specific area identification is an identification assigned by a network for a planned geographical area; and
enhancing a definition of existing system information.

In some embodiments, the enhancing a definition of existing system information includes at least one of the following:
indicating, by a system information area identification in existing system information scheduling information, an area identification to which the system information and a service related to the system information are applicable;
indicating, by type information of SIBs in the existing system information scheduling information, that the SIBs and services related to the SIBs are services having specific service areas; and
adding a sub-area identification of the system information area identification into the type information of the SIBs in the existing system information scheduling information, the sub-area identification being used to indicate the SIBs and service areas of the services related to the SIBs.

It can be seen from the above embodiment that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

### Embodiment of a fifth aspect

The embodiment of this disclosure provides an information transceiving apparatus, provided in a network device. As a principle of the apparatus is identical to that of the method in the embodiment of the second aspect, reference may be made to the embodiment of the second aspect for implementation of the apparatus, with identical or related parts being not going to be described herein any further.

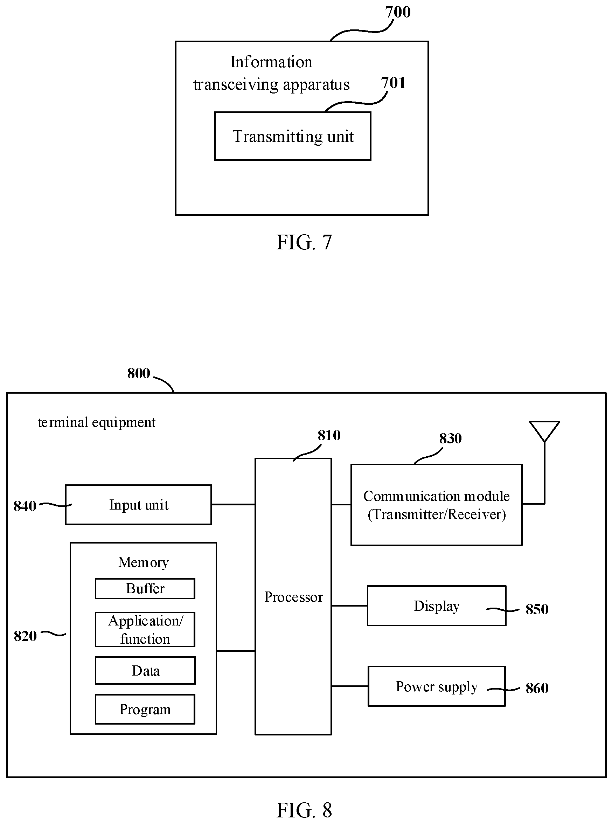

FIG. 7 is a schematic diagram of the information transceiving apparatus of the embodiment of this disclosure. As shown in FIG. 7, an information transceiving apparatus 700 includes:
a transmitting unit 701 configured to transmit first information to a terminal equipment,
the first information being at least used to indicate information related to a service area of a service, the first information being indicated by a SIB associated with the service and/or configuration information related to the service, the service being a service having a specific service area.

In some embodiments, the information related to the service area of the service is indicated in the SIB associated with the service,
and the SIB associated with the service includes scheduling information of the SIB associated with the service and/or a SIB information element (IE) associated with the service.

In some embodiments, the information related to the service area of the service is indicated in the scheduling information of the SIB associated with the service,
such as indicating the information related to the service area of the service in system information block (SIB) type information of the SIB associated with the service, the system information block type information being included under a SIB mapping information structure of the scheduling information of the SIB associated with the service;
   and/or,
the information related to the service area of the service is indicated in the SIB information element related to the service.

In some embodiments, the information related to the service area of the service is indicated in the configuration information related to the service; or
that the service is a service having a specific service area is indicated in the SIB associated with the service, and contents of the service area of the service are indicated in the configuration information related to the service.

In some embodiments, the information related to the service area of the service includes at least one of the following:
an indication that the service is a service having a specific service area;
a service area of the service (an intended service area); and
a non-service area of the service (a non-intended service area).

In some embodiments, the service area (an intended service area) of the service and/or the non-service area (a non-intended service area) of the service is/are indicated in at least one of the following manners:
an area covered by a specific beam or beam list;
an area identified by a specific PLMN or PLMN list;
an area identified by a specific TAI or TAI list;
an area identified by a specific area identification or area identification list, wherein the specific area identification is an identification assigned by a network for a planned geographical area; and
enhancing a definition of existing system information.

It can be seen from the above embodiment that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

### Embodiment of a sixth aspect

The embodiment of this disclosure provides a terminal equipment, including the information transceiving apparatus described in the embodiment of the fourth aspect.

FIG. 8 is a block diagram of a systematic structure of the terminal equipment of the embodiment of this disclosure. As shown in FIG. 8, a terminal equipment 800 may include a processor 810 and a memory 820, the memory 820 being coupled to the processor 810. It should be noted that this figure is illustrative only, and other types of structures may also be used, so as to supplement or replace this structure and achieve a telecommunications function or other functions.

In one implementation, the functions of the information transceiving apparatus may be integrated into the processor 810.

The processor 801 may be configured to: receive first information from a network device, the first information being at least used to indicate information related to a service area of a service, the first information being indicated by a SIB associated with the service and/or configuration information related to the service, and the service being a service having a specific service area.

In another implementation, the information transceiving apparatus and the processor 810 may be configured separately; for example, the information transceiving apparatus may be configured as a chip connected to the processor 810, and the functions of the information transceiving apparatus are executed under control of the processor 810.

As shown in FIG. 8, the terminal equipment 800 may further include a communication module 830, an input unit 840, a display 850, and a power supply 860. It should be noted that the terminal equipment 800 does not necessarily include all the parts shown in FIG. 8, and the above components are not necessary. Furthermore, the terminal equipment 800 may include parts not shown in FIG. 8, and the related art may be referred to.

As shown in FIG. 8, the processor 810 is sometimes referred to as a controller or an operational control, which may include a microprocessor or other processor devices and/or logic devices. The processor 810 receives input and controls operations of components of the terminal equipment 800.

Wherein, the memory 820 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 810 may execute programs stored in the memory 820, so as to realize information storage or processing, etc. Functions of other parts are similar to those of the related art, which shall not be described herein any further. The parts of the terminal equipment 800 may be realized by specific hardware, firmware, software, or any combination thereof, without departing from the scope of this disclosure.

It can be seen from the above embodiment that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

### Embodiment of a seventh aspect

The embodiment of this disclosure provides a network device, including the information transceiving apparatus described in the embodiment of the fifth aspect.

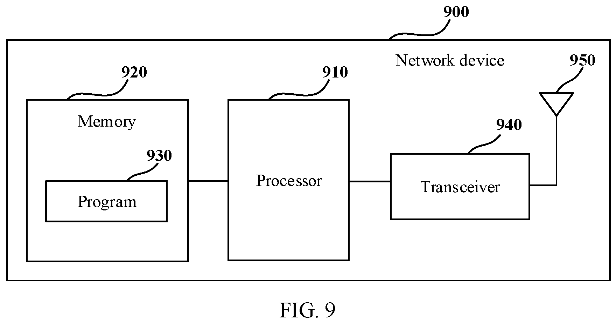

FIG. 9 is a schematic diagram of a systematic structure of the network device of the embodiment of this disclosure. As shown in FIG. 9, a network device 900 may include a processor 910 and a memory 920, the memory 920 being coupled to the processor 910. Wherein, the memory 920 may store various data, and furthermore, it may store a program 930 for data processing, and execute the program 930 under control of the processor 910, so as to receive various information transmitted by a terminal equipment, and transmit various information to the terminal equipment.

In one implementation, the functions of the information transceiving apparatus may be integrated into the processor 910.

The processor 910 may be configured to: transmit first information to a terminal equipment, wherein the first information is at least used to indicate information related to a service area of a service, and is indicated by a SIB associated with the service and/or configuration information related to the service, the service being a service having a specific service area.

In another implementation, the information transceiving apparatus and the processor 910 may be configured separately; for example, the information transceiving apparatus may be configured as a chip connected to the processor 910, and the functions of the transceiving apparatus apparatus are executed under control of the processor 910.

Furthermore, as shown in FIG. 9, the network device 900 may include a transceiver 940, and an antenna 950, etc. Wherein, functions of the above components are similar to those in the related art, and shall not be described herein any further. It should be noted that the network device 900 does not necessarily include all the parts shown in FIG. 9. Furthermore, the network device 900 may include parts not shown in FIG. 9, and the related art may be referred to.

It can be seen from the above embodiment that the network indicates information related to a service area of a service to the terminal equipment, thereby satisfying a requirement for SIB enhancement when a cell coverage area exceeds an intended service area of a broadcast or multicast service, while also taking into account services other than an MBS service that need to define an intended service area. A solution is provided for avoiding an impact on a TN system, and feasible indication methods are provided for specific content of the information related to a service area. The terminal equipment adjusts subsequent processing related to the service according to the network indication, thereby avoiding unnecessary or legally non-compliant detection and parsing of the service and saving power consumption of the terminal equipment.

### Embodiment of an eighth aspect

The embodiment of this disclosure provides a communication system, including the terminal equipment described in the embodiment of the sixth aspect and/or the network device described in the embodiment of the seventh aspect, and reference may be made to the embodiment of the sixth aspect and the embodiment of the seventh aspect for specific contents.

For example, reference may be made to FIG. 2 for a structure of the communication system. As shown in FIG. 2, the communication system 100 includes the network device 101 and the terminal equipment 102. The terminal equipment 102 may be identical to the terminal equipment described in the embodiment of the sixth aspect, and/or, the network device 101 may be identical to the network device described in the embodiment of the seventh aspect, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 6 may either correspond to software modules of procedures of a computer program, or correspond to hardware modules. Such software modules may respectively correspond to the steps shown in FIG. 3. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 6 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 6 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

## Claims

1. An information transceiving apparatus, provided in a terminal equipment, the apparatus comprising:
a receiving unit configured to receive first information from a network device,
the first information being at least used to indicate information related to a service area of a service, the first information being indicated by a SIB associated with the service and/or configuration information related to the service, and the service being a service having a specific service area.

2. The apparatus according to claim 1, wherein,
the information related to a service area of the service is indicated in the SIB associated with the service, and
the SIB associated with the service comprises scheduling information of the SIB associated with the service and/or a SIB information element (IE) associated with the service.

3. The apparatus according to claim 2, wherein,
the information related to a service area of the service is indicated in the scheduling information of the SIB associated with the service.

4. The apparatus according to claim 3, wherein,
the information related to a service area of the service is indicated in system information block type information of the SIB associated with the service, the system information block type information being comprised under a SIB mapping information structure of the scheduling information of the SIB associated with the service.

5. The apparatus according to claim 2, wherein,
within an NTN cell, the information related to a service area of the service is indicated in scheduling information of SIB19, and/or the information related to a service area of the service or a list of information related to a service area is indicated in an information element of SIB19.

6. The apparatus according to claim 5, wherein,
within the NTN cell, an indicated information related to a service area of the service comprises at least one of the following:
the information related to a service area of the service or the list of information related to a service area;
information of the service or a list of information of the service having a specific service area; or
a mapping relationship between the information related to a service area of the service and the information of the service having a specific service area.

7. The apparatus according to claim 6, wherein,
the mapping relationship between the information related to a service area of the service and the information of the service having a specific service area comprises at least one of the following:
a mapping between the information related to a service area and a service or information of the service or a list of information of the service having the service area; and
a mapping between the information of the service and the information related to a service area of the service, or a mapping between the information of the service and the list of information related to a service area of the service.

8. The apparatus according to claim 2, wherein,
the information related to a service area of the service is indicated in the SIB information element associated with the service.

9. The apparatus according to claim 1, wherein,
the information related to a service area of the service is indicated in the configuration information related to the service.

10. The apparatus according to claim 9, wherein,
the service is an MBS service, and the related configuration information is MBS broadcast configuration, and
wherein the information related to a service area of all sessions of the MBS service is indicated in the MBS broadcast configuration, or the information related to a service area is indicated respectively for different sessions of the MBS service in the MBS broadcast configuration.

11. The apparatus according to claim 1, wherein,
the service being a service having a specific service area is indicated in the SIB associated with the service, and content of the service area of the service is indicated in the configuration information related to the service.

12. The apparatus according to claim 1, wherein,
the information related to a service area of the service comprises at least one of the following:
an indication that the service is a service having a specific service area;
a service area of the service; or
a non-service area of the service.

13. The apparatus according to claim 12, wherein the service area of the service and/or the non-service area of the service is/are indicated in at least one of the following manners:
an area covered by a specific beam or beam list;
an area identified by a specific PLMN or PLMN list;
an area identified by a specific TAI or TAI list;
an area identified by a specific area identification or area identifier list, the specific area identification being an identifier assigned by a network for a planned geographical area; or
enhancing a definition of existing system information.

14. The apparatus according to claim 13, whereinthe enhancing a definition of existing system information comprises at least one of the following:
indicating, by a system information area identifier in existing system information scheduling information, an area identifier to which the system information and a service related to the system information are applicable;
indicating, by type information of SIBs in the existing system information scheduling information, that the SIBs and services related to the SIBs are services having a specific service area; or
adding a sub-area identifier of the system information area identifier into the type information of the SIBs in the existing system information scheduling information, the sub-area identifier being used to indicate the SIBs and service areas of the services related to the SIBs.

15. An information transceiving apparatus, provided in a network device, the apparatus comprising:
a transmitting unit configured to transmit first information to a terminal equipment,
the first information being at least used to indicate information related to a service area of a service, the first information being indicated by a SIB associated with the service and/or configuration information related to the service, the service being a service having a specific service area.

16. The apparatus according to claim 15, wherein,
the information related to a service area of the service is indicated in the SIB associated with the service, and
the SIB associated with the service comprises scheduling information of the SIB associated with the service and/or a SIB information element (IE) associated with the service.

17. The apparatus according to claim 16, wherein,
the information related to a service area of the service is indicated in the scheduling information of the SIB associated with the service, and/or
the information related to a service area of the service is indicated in the SIB information element associated with the service.

18. The apparatus according to claim 15, wherein,
the information related to a service area of the service is indicated in the configuration information related to the service; or
the service being a service having a specific service area is indicated in the SIB associated with the service, and content of the service area of the service is indicated in the configuration information related to the service.

19. The apparatus according to claim 15, wherein,
the information related to a service area of the service comprises at least one of the following:
an indication that the service is a service having a specific service area;
a service area of the service; or
a non-service area of the service,
wherein the service area of the service and/or the non-service area of the service is/are indicated in at least one of the following manners:
an area covered by a specific beam or beam list;
an area identified by a specific PLMN or PLMN list;
an area identified by a specific TAI or TAI list;
an area identified by a specific area identification or area identifier list, wherein the specific area identification being an identification assigned by a network for a planned geographical area; or
enhancing a definition of existing system information.

20. A communication system, comprising a terminal equipment and a network device,
the terminal equipment comprises the apparatus as described in claim 1, and/or
the network device comprises the apparatus as described in claim 15.
